# EUROPEAN PATENT SPECIFICATION

(11) **EP 3 643 182 B1**
(45) Date of publication and mention of the grant of the patent: **29.04.2026**
(21) Application number: 17918352.0
(22) Date of filing: 25.12.2017
(51) Int. Cl.: B67C 3/22, B67C 7/00, A23B 4/005, B65B 55/02, B65B 55/14, A23B 2/42, A23B 2/40

(54) **PROCESS METHOD FOR STERILE CANNING AND STERILE CANNING SYSTEM**
VERFAHREN FÜR STERILES EINDOSEN UND STERILES DOSENABFÜLLUNGSSYSTEM
PROCÉDÉ DE TRAITEMENT DE MISE EN BOÎTE STÉRILE ET SYSTÈME DE MISE EN BOÎTE STÉRILE

(30) Priority: 21.07.2017 CN 201710601624
(43) Date of publication of application: 29.04.2020
(73) Proprietor: Guangzhou Jorson Food Technology Co., Ltd., Guangzhou, Guangdong 511447 (CN)
(72) Inventor: CHEN, Jiawen, Guangzhou Guangdong 511447 (CN); CHEN, Haishan, Guangzhou Guangdong 511447 (CN)
(74) Representative: Appleyard Lees IP LLP
(86) International application number: PCT/CN2017/118373
(87) International publication number: WO 2019/015253

(56) References cited:
- EP-A1- 0 692 198
- EP-A1- 0 899 195
- EP-A1- 2 245 947
- EP-A1- 2 245 947
- EP-B1- 0 692 198
- EP-B1- 2 245 947
- CN-A- 1 125 543
- CN-A- 1 439 315
- IN-I3- 200 701 989
- JP-A- 2011 211 934
- US-A- 3 643 586
- US-A- 4 882 188
- US-A1- 2005 089 616
- US-A1- 2017 290 358

## Description

### TECHNICAL FIELD

The present invention relates to the technical field of aseptic canning, and in particular, to a processing method of aseptic canning.

### BACKGROUND

Traditional solid-state food cans all adopt a process of canning first and sterilizing afterwards: raw materials are pre-treated by washing, pre-stewing, grading, paring to organize etc., and then are weighed, canned, added with soup (water or oil), and sealed, and at last the canned food is put into a sterilization pot for stewing and sterilizing. If the PH value of the food is less than 4.5, the food can be sterilized under 100 degrees. If the PH value of the food is greater than 4.5, the food need to be sterilized at a high temperature of 121 degrees. Sterilization for different durations is carried out, according to different contents and different can types. Sterilization time is generally between more than ten minutes and dozens of minutes.

In the traditional canning process of a solid-state food, the steam cannot directly contact the food. In order to transfer heat to the can wall and then transfer the heat from the can wall to the food in the can, the food in the can should be crushed and pressed compactly inside the can, so that it can adhere to the can wall; or soup or oil is filled as a heat transfer medium. In this sterilization way, the heat transfer is slow, the heating period is long, and the flavor of food is affected.
EP0692198A1 describes a method and apparatus for heating and sterilizing food. EP0899195A1 describes a germ-free food filling and packaging apparatus.

### SUMMARY

Based on this, it is necessary to provide a processing method of aseptic canning for cooking food directly, so as to achieve fast heat transfer, a short sterilization time, and at the same time maximum preservation of nutrition of the food.

The technical solution is as follows:
A processing method of aseptic canning according to claim 1.

In the abovementioned processing method of aseptic canning, a first solid-state food (raw food to be cooked, a medium rare semi-finished product, a medium semi-finished product, a medium well semi-finished product, a cured food, a pickled food, or a cooked food for secondary cooking, etc.) is directly put into a sterilization pot, and cooked (in the way of cooking with steaming, cooking with baking, cooking with stir-frying, cooking with pan-frying, etc.) in the sterilization pot to obtain a second solid-food in an aseptic state. Then, the second solid-state food is cooled, and canned for storage. The processing method of aseptic canning adopts cooking for sterilization first, and canning aseptically later, to cook food directly, so as to achieve fast heat transfer, a short sterilization time, and at the same time maximum preservation of nutrition of the food. At the same time, with various ways of cooking, product types of solid-state food cans are diversified.

The following is a further explanation of the technical solution:
In one of the embodiments, the first solid-state food is contained in a netlike ventilation container, then put into the sterilization pot; or the first solid-state food is hung in the sterilization pot; or the first solid-state food is placed onto a roller, a baking tray and a frying pan in the sterilization pot. Specifically, the first solid-state food is contained in a bamboo cage, a grass cage or a steamer, put into a sterilization pot, and stewed and sterilized by high-temperature steam to obtain a second solid-state food. Examples include the preparation of food such as steamed pork ribs, steamed pork with rice flour, etc. Alternatively, the first solid-state food is hung and baked in the sterilization pot with a hook, to obtain a second solid-state food. Examples include the preparation of food such as roast duck, roast chicken, roast goose, etc. Alternatively, a corresponding second solid-state food is obtained by placing the first solid-state food on a roller and baking it, putting the first solid-state food on a baking tray and baking it, or putting the first solid-state food onto a frying pan and stir-frying the first solid-state food using a robot arm. The abovementioned cooking processes can all be carried out in a sterilization pot.

In one of the embodiments, a first solid-state food is movable within a sterilization pot. Thus, the first solid-state food can be moved by a conveying mechanism or a robot arm and cooked accordingly. For example, the first solid-state food can be steamed in a sterilization pot, and then baked or stir-fried.

In one of the embodiments, a process of cooking the first solid-state food comprises the following step of:

providing a heater in the sterilization pot, and heating the first solid-state food by using the energized heater, to obtain the second solid-state food in an aseptic state. Thus, when the first solid-state food is steamed by high-temperature steam, a desired second solid-state food is obtained, according to various food types or/and cooking requirements to set the parameters such as a pressure keeping time, a steaming temperature, a steaming duration, etc.; and optionally, a first solid-state food is cooked in the process such as baking, pan-frying, stir-frying, etc. by a heater (such as an electromagnetic heater or an electric heater), to obtain a second solid-state food. In the abovementioned cooking process, the first solid-state food is sterilized at the same time to obtain a second solid-state food in an aseptic state, which can then be canned, sealed and stored in a can after cooling.

After the first solid-state food is cooked to obtain the second solid-state food, the sterilization pot is vacuumized and cooled by boiling and evaporating water inside the second solid-state food. Specifically, the control of decreasing the temperature of the second solid-state food can be realized by adjusting the vacuum degree.

Since the can body is sealed in an aseptic environment inside the sterilization pot, an aseptic gas is stored in the sealed can, and the second solid-state food, the can cover and the empty can are sterilized, so that the second solid-state food sealed in the can may be preserved for a long time, and nutrition value and taste of the second solid-state food will not change. Food without preservatives is safer to eat.

Hot-pressing, rather than traditional double seaming is adopted for the sealing between the empty can and the can cover. The sealing machine is easy to operate and clean, and can be sterilized by a high temperature or ultraviolet, without the use of chemical articles.

There are various sterilization ways for the can cover and the empty can, such as an ultraviolet sterilization, pasteurization, high-temperature sterilization, ultra-high temperature sterilization, etc., which in turn can prevent the can cover or the empty can from contaminating the second solid-state food due to the inclusion of bacteria, and thus results in a flavor change of the second solid-state food in the sealed can.

In one of the embodiments, during canning the cooked second solid-state food, the processing method further comprises injecting an aseptic gas into a sterilization pot. Thus, the interior of the sterilization pot is full of an aseptic gas, which is convenient for automatically injecting the aseptic gas during canning. The aseptic gas comprises: nitrogen, an inert gas, etc.

In embodiments, it can be guaranteed that the gas outside the sterilization pot will not enter the sterilization pot, so as to protect the second solid-state food from contamination.

In one of the embodiments, during cooking the first solid-state food, a robot arm in the sterilization pot is also sterilized. Thus, contamination of the second solid-state food that will result in a failure of aseptic canning can be prevented.

An aseptic canning device may be obtained by utilizing the abovementioned processing method of aseptic canning. In turn, the solid-state food can be cooked to obtain the desired canned food. Meanwhile, aseptic canning in the sterilization pot can achieve canned food without preservatives, but with a better taste and a longer storage time, and can also satisfy various cooking ways, and diversify the types of can products of the solid-state food.

### BRIEF DESCRIPTION OF THE DRAWINGS

FIG. 1 is a flowchart of a processing method of aseptic canning according to the present invention;
FIG. 2 is a schematic diagram of the structure of a press-fitting food can according to the present invention;
FIG. 3 is a schematic diagram of the structure of a food can with an easy-to-tear laminated film according to the present invention;
FIG. 4 is a schematic diagram of the structure of an aseptic canning system

### Description of reference numerals:

100: can shell; 110: can body; 120: annular buckle section; 200: can cover; 210: annular stuck section; 220: cover body; 300: annular sealing element; 10: can body; 12: annular adhesive body; 20: cover body; 22: opening section; 30: sterilization pot; 40: solid-state food; 50: conveying mechanism; 60: sealing machine.

### DETAILED DESCRIPTION OF THE EMBODIMENTS

In order to make the purpose, the technical solution and advantages of the present invention clearer, the invention is described in further detail, with references to the accompanying drawings and specific embodiments below. It should be understood that, the specific embodiments described herein are just used to explain the invention, and do not limit the protection scope of the invention.

It should be noted that, the required temperature for high temperature (such as 121°C) and ultra-high temperature sterilization (above 135°C) in the sterilization process are the sterilization temperatures used in the food sterilization process. The specific range of the sterilization temperatures is the prior art, so description will not be repeated here. Besides, the term "aseptic" herein refers to "commercially aseptic" rather than absolute aseptic in aseptic food.

Unless otherwise defined, all the technical and scientific terms used herein have the same meanings as generally understood by those skilled in the art. Herein the terms used in the description of the invention are just to describe the purposes of the specific embodiments, but are not intended to limit the invention. The term "and/or" as used herein includes arbitrary and all combinations of one or more related items as listed.

In the invention, the "first" and "second" do not stand for specific numbers or sequences, but are merely used for distinguishing the terms.

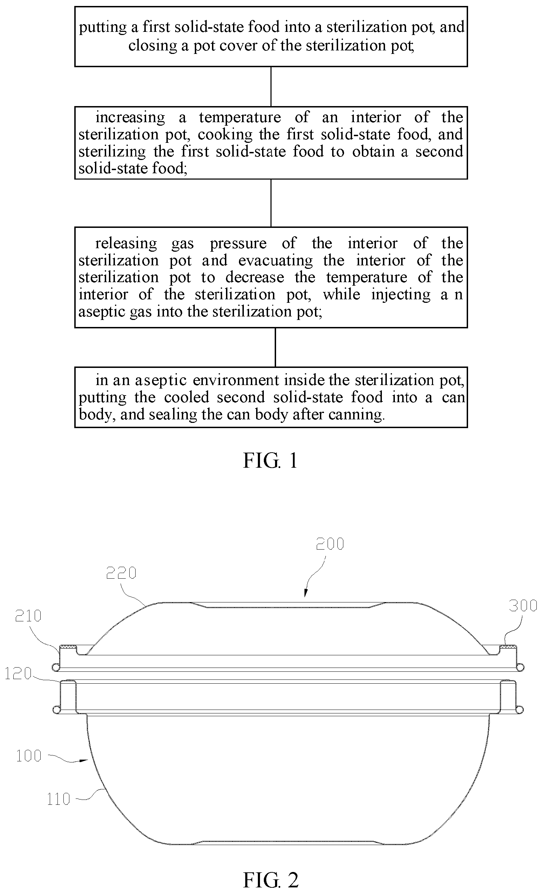

As shown in FIG. 1, a processing method of aseptic canning according to the present invention, comprises steps of:
putting a first solid-state food into a sterilization pot, and closing a pot cover of the sterilization pot;
cooking the first solid-state food by increasing a temperature of an interior of the sterilization pot, and sterilizing the first solid-state food to obtain a second solid-state food;
cooling the second solid-state food in the sterilization pot; and
in an aseptic environment inside the sterilization pot, putting the cooled second solid-state food into a can body, and sealing the can body after canning.

In the abovementioned processing method of aseptic canning, a first solid-state food is directly put into a sterilization pot, and cooked in the sterilization pot to obtain a second solid-state food in an aseptic state, and then the second solid-state food in the sterilization pot is cooled and canned for storage. The processing method of aseptic canning adopts cooking for sterilization first, and canning aseptically later, to cook food directly, so as to achieve fast heat transfer, a short sterilization time, and at the same time maximum preservation of nutrition of the food. At the same time, with various ways of cooking, product types of solid-state food cans are diversified.

It should be noted that, the first solid-state food includes: raw food to be cooked, a medium rare semi-finished product, a medium semi-finished product, a medium well semi-finished product, a cured food, a pickled food, or a cooked food for secondary cooking, etc. The cooking ways include: one or two or more combinations of cooking with steaming, cooking with baking, cooking with stir-frying, cooking with pan-frying, etc.

On the basis of the abovementioned embodiments, the first solid-state food is contained into a netlike ventilation container, and then put into the sterilization pot. Alternatively, the first solid-state food is hung in the sterilization pot. Alternatively, the first solid-state food is placed onto a roller, a baking tray and a frying pan in the sterilization pot. Specifically, the first solid-state food is contained in a bamboo cage, a grass cage or a steamer, put into a sterilization pot, and steamed and sterilized by high-temperature steam to obtain a second solid-state food. Examples include the preparation of food such as steamed pork ribs, steamed pork with rice flour, etc. Alternatively, the first solid-state food is hung and baked in the sterilization pot with a hook to obtain a second solid-state food. Examples include the preparation of food such as roast duck, roast chicken, roast goose, etc. Alternatively, a corresponding second solid-state food is obtained by placing the first solid-state food on a roller and baking it, or putting the first solid-state food on a baking tray and baking it, or putting the first solid-state food on a frying pan and stir-frying it using a robot arm. The abovementioned cooking process all can be carried out in a sterilization pot.

Moreover, the first solid-state food is movable within the sterilization pot. Thus, the first solid-state food can be moved by a conveying mechanism or a robot arm and cooked accordingly. For example, the first solid-state food can be steamed in a sterilization pot, and then baked or stir-fried. Alternatively, the first solid-state food is cooked by a pre-set process with a conveying apparatus, which may be a robot arm, a chain conveying mechanism, etc. The first solid-state food can move vertically, horizontally, or rotationally, or can turn over automatically.

On the basis of any one of the above embodiments, a process of cooking the first solid-state food comprises steps of: injecting steam into the sterilization pot and exhausting air from the sterilization pot, so that the temperature of the interior of the sterilization pot is increased to a pre-set cooking temperature, and the steam pressure of the interior of the sterilization pot is increased to a pre-set cooking pressure; steaming the first solid-state food in the sterilization pot for a pre-set time, to obtain the second solid-state food in an aseptic state; or/and providing a heater in the sterilization pot, and heating the first solid-state food by using the energized heater, to obtain the second solid-state food in an aseptic state. Thus, when a first solid-state food is steamed by high temperature steam, a desired second solid-state food is obtained according to various food types or/and cooking requirements to set the parameters such as a pressure keeping time, a steaming temperature and a steaming time, etc.; or/and a first solid-state food is cooked in the process such as baking, pan-frying, stir-frying, or the like by a heater (such as an electromagnetic heater or an electric heater), to obtain a second solid-state food. In the abovementioned cooking process, a first solid-state food is sterilized at the same time to obtain a second solid-state food in an aseptic state, which can then be canned, sealed and stored in can after cooling.

Further, after cooking well the second solid-state food, the processing method further comprises releasing the steam pressure of an interior of the sterilization pot and evacuating the interior of the sterilization pot to decrease the temperature of the interior of the sterilization pot, while injecting an aseptic gas into the sterilization pot. After the first solid-state food is cooked to obtain the second solid-state food, the sterilization pot is vacuumized and cooled by boiling and evaporation of water inside the second solid-state food. Specifically, the control of decreasing the temperature of the second solid-state food can be realized by adjusting the vacuum degree.

In addition, in an aseptic environment inside the sterilization pot, the cooled second solid-state food is put into an empty can, and the can cover is closed and sealed. Since the can body is sealed in an aseptic environment inside the sterilization pot, an aseptic gas is stored in the sealed can, and the second solid-state food, the can cover and the empty can are sterilized, so that the second solid-state food sealed in the can may be preserved for a long time, and nutrition value and taste of the second solid-state will not change. Food without preservatives is safer to eat.

Specifically, the empty can and the can cover are sealed through buckle press-fitting, high temperature press-fitting, or adhesive press-fitting. Mechanical press-fitting, high temperature press-fitting or adhesive press-fitting, rather than the traditional double seaming is adopted for the sealing between the empty can and the can cover. The sealing machine is easy to operate and clean, and can be sterilized by a high temperature or ultraviolet, without the use of chemical articles.

As shown in FIG.2, when a food press-fitting can which adopts buckle press-fitting for packaging food is adopted, the food to be packaged is placed in a can body 110 of a can shell 100, and covered by the can cover 200. The annular buckle section 120 of can shell 100 is engaged with the annular stuck section 210 of the can cover 200 by pressure, and meanwhile the annular sealing element 300 is extruded, so that food can be sealed and stored in the food press-fitting food can. In this process, due to the use of a laminated film material, the coating will not peel off during press-fitting. Meanwhile, the surface of the can body 110 is covered with a laminated film, which can prevent the food from contacting a metal of the can body 110, avoid the can body 110 from erosion and damage, and avoid wasting of the food.

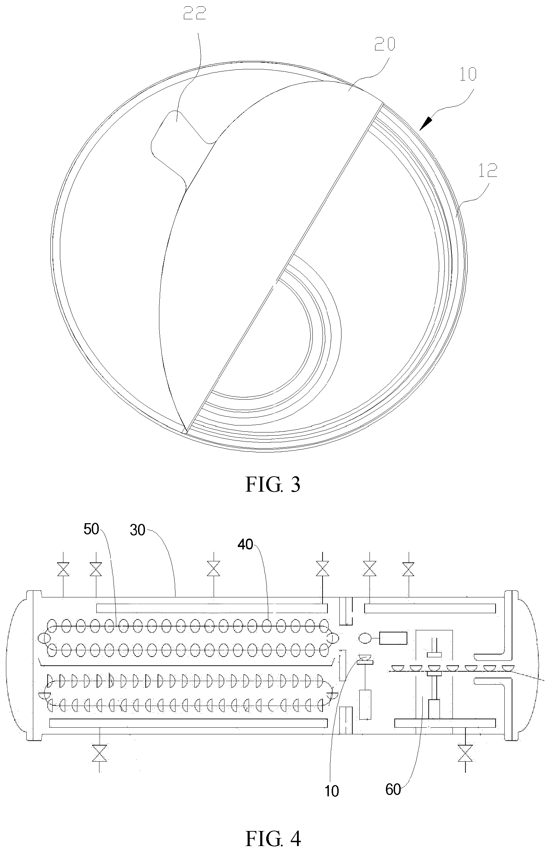

As shown in FIG. 3, when a food can with an easy-to-tear laminated film which adopts high temperature press-fitting is used for packaging food, the food to be packed is placed in a cavity of the can body 10, and then covered by the upper cover body 20. Further, the cover body 20 with an aluminum plastic film and the laminated film of the upper surface of the annular adhesive body 12 are weld together by a hot-pressing technique, and then the cavity is sealed by the cover body 20, so that the food can be sealed and preserved.

On the basis of any one of the embodiments mentioned above, during cooking the first solid-state food, a can cover and an empty can are sterilized simultaneously in the sterilization pot. There are various sterilization ways for the can cover and the empty can, such as ultraviolet sterilization, pasteurization, high-temperature sterilization or ultra-high temperature sterilization, etc., which in turn can prevent the can cover or the empty can from contaminating the second solid-state food due to inclusion of bacteria, and results in a flavor change of the second solid-state food in the sealed can. Furthermore, during cooking the first solid-state food, a robot arm, a can sealer and a transmission mechanism in a sterilization pot are sterilized. Thus, contamination of the second solid-state food, which results in a failure of aseptic canning can be avoided.

On the basis of any one of the embodiments mentioned above, during canning the cooked second solid-state food, the processing method further comprises injecting an aseptic gas into a sterilization pot. Thus, the interior of the sterilization pot is full of an aseptic gas, which is convenient for automatically injecting the aseptic gas during canning, to prevent the food from oxidative deterioration. The aseptic gas comprises: nitrogen, an inert gas, etc., and the aseptic gas can be obtained by filtration or heating.

On the basis of any one of the embodiments mentioned above, at the time of sealing the can body after canning, the gas pressure of the aseptic gas in the interior of the sterilization pot is greater than the gas pressure of the exterior of the sterilization pot, such that a vent of the sterilization pot is always provided with an aseptic gas flow flowing outwards. It can be guaranteed that the gas outside the sterilization pot will not enter the sterilization pot, so as to avoid contamination of the second solid-state food.

### Embodiment One

The unpackaged first solid-state food (the first solid-state food is solid-state fresh food) is put into a sterilization pot, and the pot cover of the sterilization pot is closed.

Air in the interior of the sterilization pot is evacuated and the temperature in the interior of the sterilization pot is increased.

The solid-state fresh food is separately contained in a small netlike ventilation container, and then put on a transport apparatus of the sterilization pot. Alternatively, the solid-state fresh food (such as pork ribs, chicken, duck, goose, etc.) is hung in the sterilization pot, so that the steam may contact the food directly, and the solid-state fresh food can be sterilized and cooked at a high temperature, which brings the obtained second solid-state food (such as solid-state steamed delicatessen) to an aseptic state. At the same time, the can cover and the empty can are sterilized at a high temperature in the sterilization pot.

The second solid-state food which is sterilized in an aseptic environment inside the sterilization pot is subjected to vacuum cooling treatment.

After the second solid-state food is cooled, aseptic nitrogen or other inert gases are injected into the sterilization pot.

In an aseptic environment inside the sterilization pot, the cooled second solid-state food is put into a food press-fitting can to be compactly sealed, for obtaining the canned food that can be preserved for a long time at a normal temperature. When the can body is sealed after canning, a slightly-positive pressure of the aseptic nitrogen is maintained, so that a vent of the pot is always provided with an aseptic gas flow flowing outwards, which prevents external bacteria from entering into the cavity of the sealed can body when the food exits from the pot .

### Embodiment Two

The unpackaged first solid-state food (the first solid-state food is solid-state fresh food) is put into a sterilization pot, and the pot cover of the sterilization pot is closed.

The solid-state fresh food (such as pork ribs, chicken, duck, goose, etc.) is hung in the sterilization pot. The heater in the sterilization pot is energized to heat, bake, sterilize and cook the solid-state fresh food to produce the second solid-state food (such as solid-state baked food), and to also bring the produced second solid-state food to an aseptic state. Meanwhile, the can cover and empty can in the sterilization pot is sterilized at a high temperature.

The second solid-state food which is sterilized in an aseptic environment inside the sterilization pot is subjected to vacuum cooling treatment.

After the second solid-state food is cooled, aseptic nitrogen or other inert gases are injected into the sterilization pot.

In an aseptic environment inside the sterilization pot, the cooled second solid-state food is put into a food press-fitting can to be compactly sealed, for obtaining the canned food that can be preserved for a long time at a normal temperature. When the can body is sealed after canning, a slightly -positive pressure of the aseptic nitrogen is maintained, so that a vent of the pot is always provided with an aseptic gas flow flowing outwards, which prevents external bacteria from entering into the cavity of the sealed can body when the food exits from the can.

Fig. 4 shows an aseptic canning system, which applies the processing method of aseptic canning mentioned above. A conveying apparatus for driving the first solid-state food or/and the second solid-state food to transport, is also provided in the sterilization pot.

Consequently, the processing method of aseptic canning mentioned above can be utilized to obtain an aseptic canning device. In turn, the solid-state food can be cooked to obtain a desired canned food. Meanwhile, aseptic canning in the sterilization pot can achieve canned food without preservatives, but with a better taste and a longer storage time, and can also satisfy various cooking ways, and diversify the types of can products of the solid-state food.

Each of the technical features of the embodiments mentioned above can be combined arbitrarily. For the sake of brevity of the description, all possible combinations of the respective technical features are not described in above mentioned embodiments. However, if only there are no contradictions among the combinations of these technical features, it should be deemed to be within the recorded scope of the present specification.

The embodiments mentioned above just represent several modes of carrying out the present invention, of which the description is more specific and detailed, but they cannot be construed as limiting the patent scope of the invention. It should be noted that, for those of ordinary skill in the art, in the context of not departing from the inventive concept of the present invention, various modifications and improvements can be further made, all of which fall within the protection scope of the invention. As a result, the protection scope of the invention patent should be subject to the appended claims.

## Claims

1. A processing method of aseptic canning, comprising steps of:
putting a first solid-state food into a sterilization pot (30), and closing a pot cover of the sterilization pot (30);
cooking the first solid-state food by increasing a temperature of an interior of the sterilization pot (30) to a pre-set cooking temperature and increasing a steam pressure of the interior of the sterilization pot (30) to a pre-set cooking pressure through injecting steam into the sterilization pot (30) and exhausting air from the sterilization pot (30), steaming the first solid-state food in the sterilization pot (30) for a preset time, and sterilizing the first solid-state food at 121°C, or above 135°C, to obtain an aseptic second solid-state food, wherein a conveying apparatus (50) for transporting the first solid-state food or/and the second solid-state food, a sealing machine (60), a can body (110) and a can cover (200) in the sterilization pot (30) are also sterilized;
cooling the second solid-state food in the sterilization pot (30) by releasing the steam pressure of the interior of the sterilization pot (30) and evacuating the interior of the sterilization pot (30) to decrease the temperature of the interior of the sterilization pot (30), while injecting an aseptic gas into the sterilization pot (30); and
in an aseptic environment inside the sterilization pot (30), putting the cooled second solid-state food into the sterilized can body (110), and sealing the can body (110) with the can cover (200) after filling by hot-pressing, wherein when sealing the can body (110) with the can cover (200) after filling, a gas pressure of an aseptic gas in the sterilization pot (30) is greater than an external gas pressure of the sterilization pot (30), such that a vent of the sterilization pot (30) is always provided with an aseptic gas flow flowing outwards, and the gas outside the sterilization pot (30) is guaranteed not to enter the sterilization pot (30), so as to avoid contamination of the second solid-state food.

2. The processing method of aseptic canning according to claim 1, wherein containing the first solid-state food into a netlike ventilation container, and then putting the first solid-state food into the sterilization pot (30); or hanging the first solid-state food in the sterilization pot (30); or placing the first solid-state food onto a roller, a baking tray, and a frying pan in the sterilization pot (30).

3. The processing method of aseptic canning according to claim 1, wherein the first solid-state food is movable within the sterilization pot (30).

4. The processing method of aseptic canning according to claim 1, wherein, a process of cooking the first solid-state food comprises steps of:
providing a heater in the sterilization pot (30), and heating the first solid-state food by using the heater energized to obtain the second solid-state food in an aseptic state.

5. The processing method of aseptic canning according to claim 1, wherein during canning the cooked second solid-state food, the processing method further comprises: injecting an aseptic gas into the sterilization pot (30).

6. The processing method of aseptic canning according to any one of claims 1 to 5, wherein, during cooking the first solid-state food, a robot arm in the sterilization pot (30) is also sterilized.

## Patentansprüche

1. Verarbeitungsverfahren für aseptische Konservierung, umfassend die Schritte:
Einbringen eines ersten festen Lebensmittels in einen Sterilisationstopf (30) und Schließen einer Topfabdeckung des Sterilisationstopfes (30);
Kochen des ersten festen Lebensmittels durch Erhöhen einer Temperatur eines Innenraums des Sterilisationstopfes (30) auf eine voreingestellte Gartemperatur und Erhöhen eines Dampfdrucks des Innenraums des Sterilisationstopfes (30) auf einen voreingestellten Gardruck durch Einleiten von Dampf in den Sterilisationstopf (30) und Ablassen von Luft aus dem Sterilisationstopf (30), Dämpfen des ersten festen Lebensmittels in dem Sterilisationstopf (30) über einen voreingestellte Zeitraum und Sterilisieren des ersten festen Lebensmittels bei 121 °C oder über 135 °C, um ein aseptisches zweites festes Lebensmittel zu erhalten, wobei eine Fördervorrichtung (50) zum Transportieren des ersten festen Lebensmittels oder/und des zweiten festen Lebensmittels, eine Versiegelungsmaschine (60), ein Dosenkörper (110) und eine Dosenabdeckung (200) in dem Sterilisationstopf (30) ebenfalls sterilisiert werden;
Abkühlen des zweiten festen Lebensmittels in dem Sterilisationstopf (30) durch Ablassen des Dampfdrucks des Innenraums des Sterilisationstopfes (30) und Evakuieren des Innenraums des Sterilisationstopfes (30), um die Temperatur des Innenraums des Sterilisationstopfes (30) zu verringern, während ein aseptisches Gas in den Sterilisationstopf (30) eingeleitet wird; und
in einer aseptischen Umgebung innerhalb des Sterilisationstopfes (30), Einfüllen des abgekühlten zweiten festen Lebensmittels in den sterilisierten Dosenkörper (110), und Versiegeln des Dosenkörpers (110) mit dem Dosendeckel (200) nach dem Befüllen durch Heißpressen, wobei beim Versiegeln des Dosenkörpers (110) mit dem Dosendeckel (200) nach dem Befüllen ein Gasdruck eines aseptischen Gases im Sterilisationstopf (30) größer ist als ein äußerer Gasdruck des Sterilisationstopfes (30), sodass eine Entlüftung des Sterilisationstopfes (30) stets mit einem nach außen strömenden aseptischen Gasstrom versorgt wird, und sichergestellt wird, dass das Gas außerhalb des Sterilisationstopfes (30) nicht in den Sterilisationstopf (30) gelangt, um eine Kontamination des zweiten festen Lebensmittels zu verhindern.

2. Verfahren für aseptische Konservierung nach Anspruch 1, umfassend das Aufnehmen des ersten festen Lebensmittels in einem netzartigen Belüftungsbehälter und dann das Einführen des ersten festen Lebensmittels in den Sterilisationstopf (30); oder das Hängen des ersten festen Lebensmittels in den Sterilisationstopf (30); oder das Anordnen des ersten festen Lebensmittels auf einem Rollrost, einem Backblech oder einer Bratpfanne in dem Sterilisationstopf (30).

3. Verarbeitungsverfahren für aseptische Konservierung nach Anspruch 1, wobei das erste feste Lebensmittel innerhalb des Sterilisationstopfes (30) beweglich ist.

4. Verarbeitungsverfahren für aseptische Konservierung nach Anspruch 1, wobei ein Prozess des Garens des ersten festen Lebensmittels die folgenden Schritte umfasst:
Bereitstellen einer Heizvorrichtung in dem Sterilisationstopf (30) und Erwärmen des ersten festen Lebensmittels unter Verwendung der Heizvorrichtung, die erregt wird, um das zweite feste Lebensmittel in einem aseptischen Zustand zu erhalten.

5. Verarbeitungsverfahren für aseptische Konservierung nach Anspruch 1, wobei das Verarbeitungsverfahren während der Konservierung des gekochten zweiten festen Lebensmittels ferner umfasst: Einleiten eines aseptischen Gases in den Sterilisationstopf (30).

6. Verarbeitungsverfahren für aseptische Konservierung nach einem der Ansprüche 1 bis 5, wobei während des Garens des ersten festen Lebensmittels ein Roboterarm in dem Sterilisationstopf (30) ebenfalls sterilisiert wird.

## Revendications

1. Procédé de traitement de mise en boîte aseptique, comprenant les étapes suivantes :
le placement d'un premier aliment à l'état solide dans un pot de stérilisation (30), et la fermeture par un couvercle de pot du pot de stérilisation (30) ;
la cuisson du premier aliment à l'état solide en augmentant une température d'un intérieur du pot de stérilisation (30) à une température de cuisson prédéfinie et en augmentant une pression de vapeur de l'intérieur du pot de stérilisation (30) à une pression de cuisson prédéfinie en injectant de la vapeur dans le pot de stérilisation (30) et en évacuant l'air du pot de stérilisation (30), en faisant cuire à la vapeur le premier aliment à l'état solide dans le pot de stérilisation (30) pendant une durée prédéfinie, et la stérilisation du premier aliment à l'état solide à une température de 121 °C ou plus de 135 °C pour obtenir un second aliment à l'état solide aseptique, un appareil de transport (50) pour transporter le premier aliment à l'état solide et/ou le second aliment à l'état solide, une machine de scellage (60), un corps de boîte (110) et un couvercle de boîte (200) dans le pot de stérilisation (30) étant également stérilisés ;
le refroidissement du second aliment à l'état solide dans le pot de stérilisation (30) en relâchant la pression de vapeur de l'intérieur du pot de stérilisation (30) et en évacuant l'intérieur du pot de stérilisation (30) pour diminuer la température de l'intérieur du pot de stérilisation (30), tout en injectant un gaz aseptique dans le pot de stérilisation (30) ; et
dans un environnement aseptique à l'intérieur du pot de stérilisation (30), le placement du second aliment à l'état solide refroidi dans le corps de boîte stérilisée (110), et le scellement du corps de boîte (110) avec le couvercle de boîte (200) après remplissage par pressage à chaud, lors du scellement du corps de boîte (110) avec le couvercle de boîte (200) après remplissage, une pression de gaz aseptique dans le pot de stérilisation (30) étant supérieure à une pression de gaz externe du pot de stérilisation (30), de sorte qu'un évent du pot de stérilisation (30) soit toujours pourvu d'un flux gazeux aseptique s'écoulant vers l'extérieur, et le gaz à l'extérieur du pot de stérilisation (30) soit garanti de ne pas pénétrer dans le pot de stérilisation (30), de manière à éviter la contamination du second aliment à l'état solide.

2. Procédé de traitement de mise en boîte aseptique selon la revendication 1, comprenant le placement du premier aliment à l'état solide dans un récipient de ventilation en forme de filet, puis le placement du premier aliment à l'état solide dans le pot de stérilisation (30) ; ou le maintien du premier aliment à l'état solide dans le pot de stérilisation (30) ; ou le placement du premier aliment à l'état solide sur un rouleau, un plateau de cuisson et une poêle dans un pot de stérilisation (30).

3. Procédé de traitement de mise en boîte aseptique selon la revendication 1, le premier aliment à l'état solide étant mobile à l'intérieur du pot de stérilisation (30).

4. Procédé de traitement de mise en boîte aseptique selon la revendication 1, un procédé de cuisson du premier aliment à l'état solide comprenant les étapes de :
la mise en place d'un dispositif de chauffage dans le pot de stérilisation (30) et le chauffage du premier aliment à l'état solide au moyen du dispositif de chauffage alimenté pour obtenir le second aliment à l'état solide dans un état aseptique.

5. Procédé de traitement de mise en boîte aseptique selon la revendication 1, pendant la mise en boîte du second aliment cuit à l'état solide, le procédé de traitement comprenant en outre : l'injection d'un gaz aseptique dans le pot de stérilisation (30).

6. Procédé de traitement de mise en boîte aseptique selon l'une quelconque des revendications 1 à 5, pendant la cuisson du premier aliment à l'état solide, un bras robotique dans le pot de stérilisation (30) étant également stérilisé.
